# EUROPÄISCHE PATENTSCHRIFT

(11) **EP 0 601 435 B1**
(45) Veröffentlichungstag und Bekanntmachung des Hinweises auf die Patenterteilung: **12.03.1997**
(21) Anmeldenummer: 93119243.9
(22) Anmeldetag: 30.11.1993
(51) Int. Cl.: A24C 5/34, G01M 3/02

(54) **Dichtelement zum Leiten von Prüfluft**
Sealing element for guiding the testing fluid
Elément d'étanchéité pour diriger l'air de contrôle

(30) Priorität: 11.12.1992 DE 4241798
(43) Veröffentlichungstag der Anmeldung: 15.06.1994
(73) Patentinhaber: Hauni Maschinenbau Aktiengesellschaft, D-21033 Hamburg (DE)
(72) Erfinder: Koch, Franz-Peter, D-21493 Schwarzenbek (DE)

(56) Entgegenhaltungen:
- DE-A- 3 434 928
- US-A- 4 429 567

## Beschreibung

Die Erfindung betrifft ein Dichtelement zum Leiten von Prüfluft zu oder von stabförmigen Artikeln der tabakverarbeitenden Industrie, das aus elastischem Material besteht und eine axial verschiebbare Bodenwand mit einem Durchlaß für die Prüfluft sowie eine sich in Abhängigkeit von einer Verschiebung der Bodenwand radial verformende ringförmige Dichtlippe aufweist.

Ein Dichtelement der eingangs genannten Art ist aus der US-PS 4 429 567 einschließlich seines Einbaus in eine Prüfvorrichtung (Prüftrommel) und seiner Wirkungsweise beim Prüfen von Zigaretten bekannt.

Das der Erfindung zugrundeliegende Problem betrifft eine Weiterbildung des bekannten Dichtelementes zwecks Verringerung der Gefahr von Beschädigungen durch die Artikel.

Die Lösung besteht darin, daß in dem Bereich, in dem Dichtlippe und Bodenwand an ihren den Artikeln benachbarten Flächen aneinandergrenzen (Übergangsbereich), eine von der Artikelendfläche abgewandte ringförmige Vertiefung vorgesehen ist.

Eine vorteilhafte Ausgestaltung der Erfindung besteht darin, daß die ringförmige Vertiefung in einem Längsabschnitt zumindest annähernd die Form eines Halbkreises hat. Ein bevorzugtes Material ist Gummi, elastischer Kunststoff oder Silikon.

Die Erfindung weist den Vorteil auf, daß die Standzeit des Dichtelementes verbessert wird, weil scharfe Kanten der Artikel das elastische Material, aus dem das Dichtelement besteht, weniger schnell zerstören können.

Die Erfindung wird anhand eines ein Dichtelement im Längsschnitt und stark vergrößertem Maßstab zeigenden Ausführungsbeispiels näher erläutert.

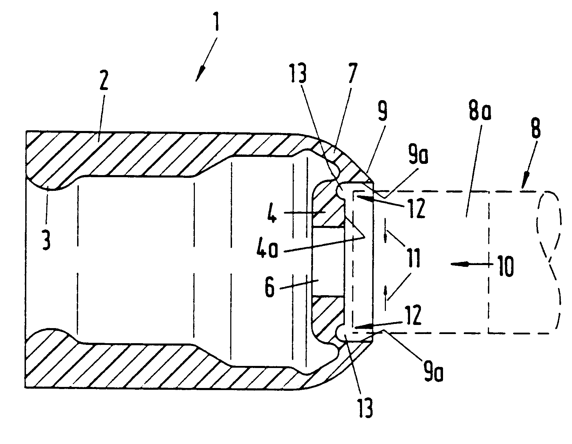

Das Dichtelement 1 zum Leiten von Prüfluft zu einem Artikel 8 der tabakverarbeitenden Industrie, z. B. einer Zigarette, weist einen hohlen zylindrischen Dichtkörper 2 aus Gummi oder gummielastischem Material, das ein geeigneter elastischer Kunststoff, Silikon oder dgl. sein kann, auf. Ein sich nach innen erstreckender Wulst 3 dient zum Befestigen des Dichtelementes auf einem nicht dargestellten Haltekörper aus Metall oder Kunststoff, etwa wie in der US-PS 4 429 567 (Figur 1) dargestellt. Das Dichtelement 1 weist außerdem eine Bodenwand 4, in der sich ein Durchlaß 6 für die Prüfluft befindet, sowie eine Dichtlippe 7 auf. Letztere verschiebt sich, wenn eine zu prüfende Zigarette 8 mit ihrem filterseitigen Ende 8a, gegen die Außenfläche 4a der Bodenwand 4 in Richtung des Pfeils 10 geschoben wird, so daß der Dichtlippenrand 9 radial nach innen (Pfeil 11) bewegt wird, bis er sich mit seiner Endfläche 9a ringförmig an die ringförmige Artikeloberfläche 8a anlegt und damit den Innenraum des Artikels gegen Atmosphäre abdichtet. In dem Übergangsbereich 12, in dem die dem Artikel 8, 8a benachbarten Flächen 4a der Bodenwand 4 und 9a des Dichtlippenrandes 9 aneinandergrenzen, ist eine dem Artikel abgewandte Vertiefung 13 eingebracht, die vorteilhaft die im Längsschnitt der Zeichnung dargestellte Halbkreisform hat, aber auch anders ausgebildete Formen als die dargestellte aufweisen kann. Die scharfe äußere Kante des Filterendes 8a befindet sich im Bereich der Vertiefung, so daß sie beim Andrücken der Zigarette 8 an die Bodenwand 4 zwecks Abdichtung keine Beschädigung der Fläche 4a verursachen kann.
Das Dichtelement 1 kann gemäß der Erfindung auch zum Leiten von Prüfluft von dem Artikel 8, also z. B. aus der Zigarette heraus, dienen. Es ist gemäß der Erfindung auch einsetzbar für solche Prüfaufgaben, bei denen im Inneren der Artikel ein Über- oder Unterdruck erzeugt wird, wobei ein vom Zustand der Umhüllung abhängiges pneumatisches Signal als Meßsignal verwendet wird.

## Patentansprüche

1. Dichtelement zum Leiten von Prüfluft zu oder von stabförmigen Artikeln der tabakverarbeitenden Industrie, das aus elastischem Material besteht und das eine axial verschiebbare Bodenwand mit einem Durchlaß für die Prüfluft sowie eine sich in Abhängigkeit von einer Verschiebung der Bodenwand radial verformende ringförmige Dichtlippe aufweist, dadurch gekennzeichnet, daß im Bereich (12), in dem Dichtlippe (9) und Bodenwand (4) an ihren den Artikeln (8, 8a) benachbarten Flächen (9a bzw. 4a) aneinandergrenzen, eine von der Artikelendfläche abgewandte ringförmige Vertiefung (13) vorgesehen ist.

2. Vorrichtung nach Anspruch 1, dadurch gekennzeichnet, daß die ringförmige Vertiefung (13) in einem Längsschnitt zumindest annähernd die Form eines Halbkreises hat.

3. Dichtelement nach Anspruch 1 und/oder 2, dadurch gekennzeichnet, daß zumindest die Dichtlippe (9) aus elastischem Material wie z.B. Gummi, elastischer Kunstoff, Silikon und dgl. besteht.

## Claims

1. A sealing element for guiding testing air to or from rod-shaped articles of the tobacco-processing industry, this element being of resilient material and having an axially displaceable base wall with an aperture for the testing air, and an annular sealing lip which deforms radially in dependence on displacement of the base wall, characterized in that an annular depression (13) remote from the end face of the articles is provided in the region (12) in which the sealing lip (9) and the base wall (4) adjoin one another at their surfaces (9a and 4a) adjacent to the articles (8, 8a).

2. An apparatus according to Claim 1, characterized in that the annular depression (13) has at least approximately the shape of a semi-circle in a longitudinal section.

3. A sealing element according to Claim 1 and/or 2, characterized in that at least the sealing lip (9) is made of resilient material, such as rubber, resilient plastics material, silicone and the like.

## Revendications

1. Elément d'étanchéité destiné à diriger de l'air de contrôle vers ou depuis des articles en forme de bâtonnet de l'industrie de transformation du tabac, qui est réalisé en un matériau élastique et qui comporte une paroi de fond déplaçable axialement, pourvue d'un passage pour l'air de contrôle, ainsi qu'une lèvre d'étanchéité de forme annulaire, se déformant radialement en fonction d'un déplacement de la paroi de fond, caractérisé en ce, que dans la zone (12) dans laquelle la lèvre d'étanchéité (9) et la paroi de fond (4) sont contiguës au niveau de leurs surfaces (9a ou 4a) voisines des articles (8, 8a), il est prévu un creux (13) de forme annulaire, s'éloignant de la surface terminale de l'article.

2. Dispositif selon la revendication 1, caractérisé en ce que le creux (13) de forme annulaire présente, dans une coupe longitudinale, au moins approximativement la forme d'un demi-cercle.

3. Elément d'étanchéité selon la revendication 1 et/ou 2, caractérisé en ce qu'au moins la lèvre d'étanchéité (9) est réalisée en un matériau élastique, tel que, par exemple, du caoutchouc, une matière plastique élastique, des silicones et autres matériaux similaires.
